# EUROPEAN PATENT SPECIFICATION

(11) **EP 1 019 236 B1**
(45) Date of publication and mention of the grant of the patent: **02.01.2002**
(21) Application number: 98944931.9
(22) Date of filing: 01.10.1998
(51) Int. Cl.: B29C 47/12, B29C 49/00, B29C 33/36

(54) **MOLDING APPARATUS WITH DOWNWARDLY MOVING MOLD TUNNEL**
GIESSVORRICHTUNG MIT ABWÄRTS BEWEGTEM FORMTUNNEL
APPAREIL DE MOULAGE COMPORTANT UN TUNNEL CONSTITUE DE BLOCS DE MOULAGE SE DEPLACANT VERS LE BAS

(30) Priority: 03.10.1997 US 943120
(43) Date of publication of application: 19.07.2000
(73) Proprietor: Lupke, Manfred Arno Alfred, Thornhill Ontario L3T 1W6 (CA); Lupke, Stefan A., Thornhill, Ontario L3T 1X6 (CA)
(72) Inventor: Lupke, Manfred Arno Alfred, Thornhill Ontario L3T 1W6 (CA); Lupke, Stefan A., Thornhill, Ontario L3T 1X6 (CA)
(74) Representative: Lippert, Hans-Joachim, Dipl.-Ing.
(86) International application number: CA9800903
(87) International publication number: WO9917916

(56) References cited:
- WO-A-85/01471
- WO-A-94/09964
- DE-A- 1 486 052
- DE-C- 19 724 857
- GB-A- 2 134 844
- US-A- 3 519 705

## Description

### FIELD OF THE INVENTION

The present invention relates to a plastic mold apparatus of the type in which a continuous stream of molten plastic is fed to a moving mold tunnel.

### BACKGROUND OF THE INVENTION

A known molding apparatus is one in which an extruder feeds a continuous stream of molten plastic to a horizontally extending mold tunnel. This type of apparatus is very beneficial for example in a formation of plastic pipe. It is not however well suited for the formation of irregularly shaped plastic articles which require variable positioning of the feed of the plastic to the mold tunnel.

Although very rare vertically operating extruders are known, as described in United States patent 3,519,705 and U.K. Patent 2,134,844A. The extruders in both of these patents operate using blow molding and as such the product shaping regions known as mold tunnels must be sealed. Furthermore, the extruders in these two patents are trapped within the upper end of the mold tunnels prohibiting positional adjustments of the extruder relative to the mold tunnel.

### SUMMARY OF THE INVENTION

The present invention provides a plastic molding apparatus comprising an extruder and a vertically extending mold tunnel formed by mated mold block sections which are moved downwardly through the mold tunnel as part of a continuous looping of the mold block sections around the apparatus. The mold tunnel has an upwardly opening tunnel mouth and the extruder feeds a stream of molten plastic downwardly into the mouth of the mold tunnel.

The apparatus of the present invention is particularly useful in the molding of irregularly shaped articles because either the mold tunnel and/or the extruder can be easily adjusted in position while maintaining feed of the plastic from the extruder to the mold tunnel in meeting the requirements of forming irregularly shaped plastic parts.

### BRIEF DESCRIPTION OF THE DRAWINGS

The above as well as other advantages and features of the present invention will be described in greater detail according to the preferred embodiments of the present invention in which;
Figure 1 is a side view of a molding apparatus according to a preferred embodiment of the present invention;
Figure 2 is an enlarged side view of the upper mold tunnel region of the apparatus of Figure 1;
Figures 3 and 4 are sectional views along the lines 3-3 and 4-4 respectively of Figure 2.

### DETAILED DESCRIPTION ACCORDING TO THE PREFERRED EMBODIMENTS OF THE PRESENT INVENTION

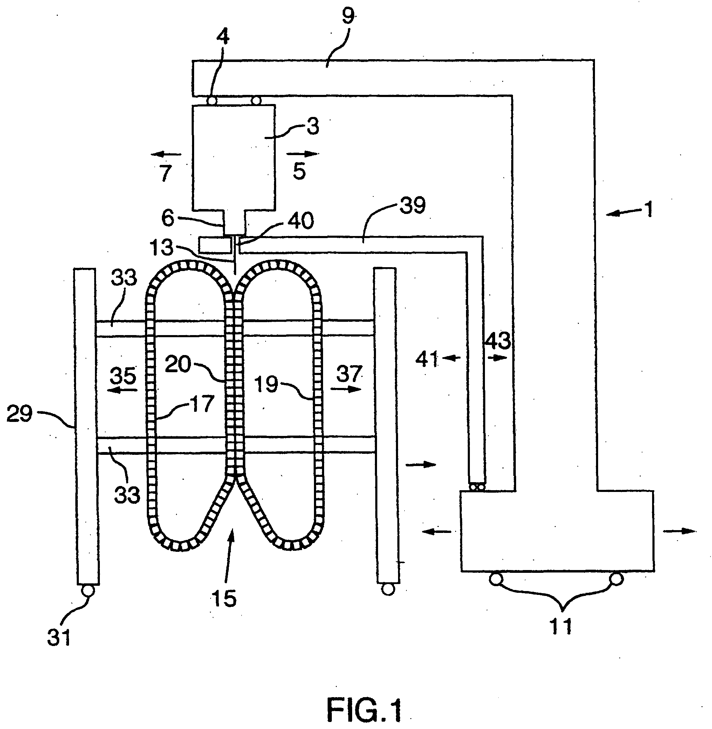

Figure 1 shows a plastic molding apparatus generally indicated at 1. This apparatus comprises an extruder 3 which feeds a molten stream of plastic 13 to a product shaping region generally indicated at 15. In the particular embodiment shown, the product shaping region comprises a pair of side by side endless loop carrier tracks 17 and 19. A plurality of mold block sections are secured around each of the carrier tracks. The carrier tracks move the mold block sections to a central mold tunnel 20 where the mold block sections on one track close and mate with the mold block sections on the other carrier track. As will be seen in Figure 1, the mold tunnel 20 is vertically extending and the mold block sections when mated with one another move downwardly through the mold tunnel. The tunnel mouth is at the upper end of the mold tunnel where the stream of plastic 13 feeds into the mold tunnel.

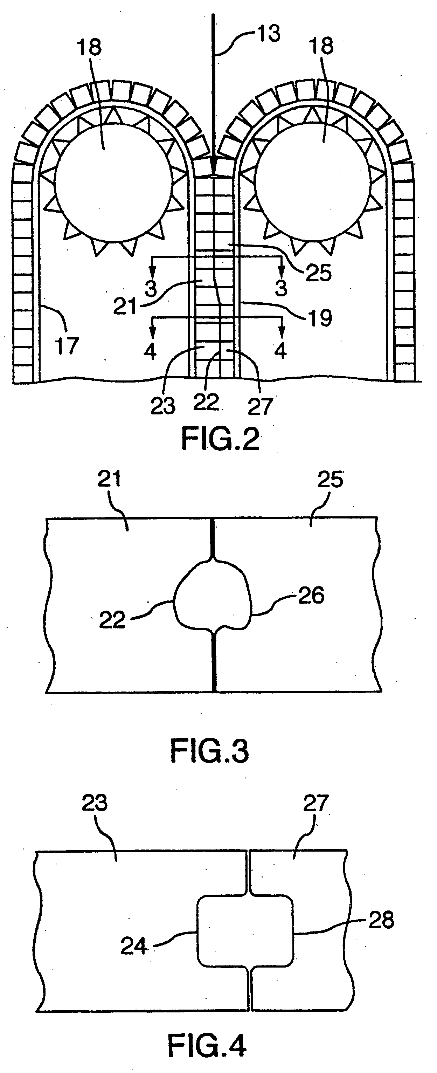

Each of the tracks is driven by a gear 18 at one end of each track. Figure 2 shows the drive gears 18 as being at the upper ends of the continuously looped, tracks however, it is equally possible to provide the drive gears at the lower ends of the tracks. It may also be desirable to provide drive gears at each end of both tracks.

The movement of the tracks is extremely efficient and requires very little in the way of a driving force. As will be understood from the drawings, each track with its mold blocks is balanced from side to side such that the amount of lift required to move the mold block sections upwardly on one side of each track is effectively offset by the weight of the mold block sections moving downwardly on the other side of each track.

A number of features are produced as a result of the vertical orientation of the apparatus of the present invention. One of those advantages is that the apparatus takes up less floor space than a conventional horizontally operating extrusion type molding apparatus.

Even more important to the present invention is the ease with which the extruder can be lined up with the mold tunnel and more specifically the mouth of the mold tunnel. Furthermore, the extruder feeds through gravity down into the mold tunnel which requires less working pressure at the extruder. In addition, the actual extrusion nozzle 6 of the extruder does not have to be trapped within the mold tunnel but rather can be positioned remotely thereof as shown in Figure 1 which again enhances the ability to align the extruder with the mold tunnel should movement be required of either as described below. In such a case the molding will be preferably achieved by vacuum within the mold tunnel.

Extrusion apparatus 1 is particularly well suited for the formation irregularly shaped articles such as bottles, automotive parts or any other type of plastic molded article.

In the embodiment shown, carrier tracks 17 and 19 are, as described above, used to move a plurality of mold block sections. These mold block sections include different. sets of mold block sections which mate with one another in the mold tunnel. The different sets of mold block sections may have different configurations according to the shape of the plastic article to be formed. For example, mold block section 21 on track 17 mates in the mold tunnel with.mold block section 25 on track 19 as shown in Figure 3 of the drawings. Mold block section 21 has an interior mold cavity. 22 and mold block section 25 has an interior mold cavity 26. As these two mold block sections are brought by their respective carriers to the upper end of the mold tunnel where they close with one another as shown in Figure 3, the mouth of the mold tunnel is formed by the mating of the mold cavities 22 and 26. The stream 13 of molten parison is then fed from the extruder 3 into the mouth of the mold tunnel having this shape and being in a specific position below the extruder.

The shape and positioning of the tunnel mouth is not however always the same as what is shown in Figure 3. For example, tracks 17 and 19 are provided with a different set of mold block sections 23 and 27 which also mate with one another in the mold tunnel. Mold block section 23 has an interior cavity 24 while mold block section 27 has an interior cavity 28 as shown in Figure 4 of the drawings. When these two mold block sections are brought around to the top of the mold tunnel they will form the mold tunnel mouth of a different shape than what is shown in Figure 3. In addition, the positioning of the mouth of the mold tunnel has shifted in a horizontal plane from the Figure 3 to the Figure 4 position. Note that the shifting, as evidenced by the parting line 22 in figure 2 of the mold block sections, is gradual so that the full mouth of the tunnel is exposed.

In view of the above described shifting of the tunnel mouth it is important that the apparatus be capable of adjustment to ensure that the flow of plastic from the extruder goes directly into the mouth of the mold tunnel-regardless of its shape and position. This is achievable in a number of different ways as described later below. However, it should be noted at this point that each of the adjustments is easily made because of the vertical orientation of the mold tunnel, the separation of the extruder from the mold tunnel and the ability of the extruder to feed downwardly into the mold tunnel.

As will be seen in Figure- 1, extruder 3 is held in its downwardly directed position by an extruder support 9. The extruder head itself may be adjustably secured.as indicated at 4 to the support 9 which allows horizontal or side to side adjustment of the extruder head as indicated by arrows 5 and 7.

It is also possible to have the base of the extruder support 9 seated on adjustment members 11 on the ground surface for the support. This again would provide a side to side adjustment of the extruder head.

Another method of ensuring alignment of the plastic flow to a variably positioned tunnel is by making the mold block carrier tracks 17 and 19 movable in a horizontal plane. In the embodiment shown, the two tracks are held by support beams 33 of a carrier support 29. The carrier tracks are adjustable along beams 33 in the direction of arrows 35 and 37. During the mold operation, the two tracks will move simultaneously with one another to keep the mold tunnel closed. However, during down times, either one or both of the carrier tracks are movable along beams 33 independently of one another in opposite directions to separate the two tracks for cleaning and/or replacement of the mold block sections.

As also shown in Figure 1, the entire support 29 for the mold block carriers may sit on an adjustable base 31 that allows side to side movement of the support 29 relative to the ground surface.

In a further embodiment of the present invention, a parison guide 39 is provided between the nozzle 6 of the extruder 3 and the mouth of the mold tunnel. This guide is again movable side to side in the horizontal plane as indicated by arrows 41 and 43.

Guide 39 has an opening 40 through the guide. The parison flows through and is guided by opening 40. When the guide is adjusted in a side to side direction, a corresponding adjustment is made in the flow direction of the parison from the extruder. This adjustment will correspond to the positioning of the mouth opening to the tunnel which in turn depends upon which particular set of mating mold block sections are. at the upper end of the tunnel.

When working with guide 39, it may be desirable to provide a flow of fluid around the edges of the guide to prevent the parison from sticking to the guide.

The adjustment of the alignment of the parison flow from the extruder to the mouth of the tunnel regardless of what means is used to make that adjustment is preferably dictated by a controller within the system which is. preprogrammed to make the appropriate adjustments at the appropriate times.

Another feature of the present invention is that the speed of the mated mold block sections through the mold tunnel can be varied by changing the speed of the carrier tracks. This in turn changes the thickness of the shaped plastic or the diameter of the part formed within the mold tunnel without changing the flow of plastic from the extruder. As alternatives, the speed of the flow of plastic from the extruder can also be varied to change product wall thickness or product diameter by adjustable gaps on the extruder or by the use of adjustment screws as are known in the molding art.

Although various preferred embodiments of the present invention have been described in detail, it will be appreciated by those skilled in the art, that variations may be made without departing from the scope of the invention as defined in the appended claims.

## Claims

1. A plastic molding apparatus (1) comprising an extruder (3) and a vertically extending mold tunnel (20) formed by mated mold block sections (21, 25) which are moved downwardly through the mold tunnel as part of a continuous looping of the mold block sections around the apparatus, the apparatus being **characterized in that** the mold tunnel has an open mouth at the upper end of the tunnel, the extruder has a nozzle (6) which is directed at without being trapped within the mouth of the mold tunnel and the apparatus uses vacuum to form product within the mold tunnel.

2. A plastic molding apparatus as claimed in Claim 1, wherein said mold block sections include sets of mated mold block sections (21, 25) of different configurations and wherein said tunnel mouth shifts to different positions in a horizontal plane according to which set of mold blocks is presented at a particular time at the tunnel mouth, and said apparatus being adjustable to provide alignment of the stream of plastic (13) with the tunnel mouth at the different positions of the tunnel mouth.

3. A plastic molding apparatus as claimed in Claim 2, wherein said mold block sections are moved by carrier means (17,19) which is mounted on and horizontally adjustable of a support (29) for said carrier means.

4. A plastic molding apparatus as claimed in Claim 3, wherein said carrier means comprises a pair of side by side mold block carrier tracks (17, 19) which are horizontally adjustable together with one another on said support.

5. A plastic molding apparatus as claimed in Claim 4, wherein at least one of said mold block carrier tracks (17, 19) is independently adjustable on said support relative to the other of said mold block carrier tracks.

6. A plastic molding apparatus as claimed in Claim 2, wherein said extruder (3) is horizontally adjustable.

7. A plastic molding apparatus as claimed in Claim 2, including an adjustable guide (40) which is between said extruder and said mold tunnel and which provides horizontal adjustment of the stream of plastic (13) from said extruder to the mouth of the tunnel.

8. A plastic molding apparatus as claimed in Claim 2, wherein said carrier means (17, 19) is adjustable in speed according to which set of mold block sections (21, 25) is presented at the upper end of said mold tunnel.

9. A plastic molding apparatus as claimed in Claim 2, including a controller which is programmed to automatically adjust said apparatus to maintain feed of the stream of molten plastic (13) into the tunnel mouth at the different positions thereof.

## Patentansprüche

1. Vorrichtung zum Formen von Kunststoffteilen (1) mit einem Extruder (3) und einem vertikal sich erstreckenden Formtunnel (20), der durch aneinandergrenzende Formbacken (21, 25) gebildet ist, welche als Teile einer kontinuierlich um die Vorrichtung laufenden Schleife von Formbacken durch den Formtunnel abwärts bewegt werden, **dadurch gekennzeichnet, dass** der Formtunnel am oberen Ende des Tunnels eine Öffnung aufweist, der Extruder eine Düse aufweist, die auf die Öffnung des Tunnels gerichtet ist, ohne in dieser Öffnung angeordnet zu sein, und die Vorrichtung zur Formung eines Erzeugnisses innerhalb des Formtunnels ein Vakuum verwendet.

2. Vorrichtung zum Formen von Kunststoffteilen nach Anspruch 1, wobei die Formbacken Sätze von aneinandergrenzenden Formbacken (21, 25) mit unterschiedlichen Konfigurationen einschliessen, und die. Öffnung des Tunnels unterschiedliche Positionen in einer horizontalen Ebene einnimmt, je nachdem welcher Satz von Formblöcken zu einem bestimmten Zeitpunkt an der Öffnung des Tunnels vorliegt und wobei die Vorrichtung zur Ausrichtung des Kunststoffstroms (13) mit der Öffnung des Tunnels bei unterschiedlichen Positionen der Öffnung des Tunnels einstellbar ist.

3. Vorrichtung zum Formen von Kunststoffteilen nach Anspruch 2, wobei die Formbacken durch eine Trägereinrichtung (17, 19) bewegbar sind, die an einer Stützeinrichtung (29) angebracht und horizontal zu dieser einstellbar ist.

4. Vorrichtung zum Formen von Kunststoffteilen nach Anspruch 3, wobei die Trägereinrichtung ein Paar von nebeneinander liegenden Tägerbahnen (17, 19) für Formblöcke aufweist, die gemeinsam an der Stützeinrichtung horizontal einstellbar sind.

5. Vorrichtung zum Formen von Kunststoffteilen nach Anspruch 4, wobei wenigstens eine der Trägerbahnen (17, 19) für Formblöcke relativ zu der anderen an der Stützeinrichtung unabhängig einstellbar ist.

6. Vorrichtung zum Formen von Kunststoffteilen nach Anspruch 2, wobei der Extruder (3) horizontal einstellbar ist.

7. Vorrichtung zum Formen von Kunststoffteilen nach Anspruch 2 mit einer einstellbaren Führung (40), die zwischen dem Extruder und dem Formtunnel angeordnet ist und eine horizontale Einstellung des Kunststoffstroms (13) von dem Extruder zu der Öffnung des Tunnels gestattet.

8. Vorrichtung zum Formen von Kunststoffteilen nach Anspruch 2, wobei die Geschwindigkeit der Trägereinrichtung (17, 19) abhängig davon einstellbar ist, welcher Satz von Formbacken (21, 25) an dem oberen Ende des Formtunnels vorliegt.

9. Vorrichtung zum Formen von Kunststoffteilen nach Anspruch 2 mit einer Regeleinrichtung, die zur automatischen Einstellung der Vorrichtung programmiert ist, die Zufuhr des Stroms geschmolzenen Kunststoffs (13) bei verschiedenen Positionen der Öffnung des Tunnels aufrechtzuerhalten.

## Revendications

1. Appareil (1) de moulage de matière plastique comprenant une extrudeuse (3) et un tunnel (20) de moule disposé verticalement et formé par des tronçons coopérants (21, 25) de bloc de moule qui sont descendus dans le tunnel de moule dans une partie d'un déplacement continu en boucle des tronçons de bloc de moule autour de l'appareil, l'appareil étant **caractérisé en ce que** le tunnel de moule a une embouchure ouverte à l'extrémité supérieure du tunnel, l'extrudeuse a une buse (6) dirigée dans l'embouchure du tunnel de moule maie sans être piégée dans celle-ci, et l'appareil utilise le vide pour former un produit dans le tunnel de moule.

2. Appareil selon la revendication 1, dans lequel les tronçons de bloc de moule comprennent des ensembles de tronçons complémentaires (21, 25) de bloc de moule de configurations différentes, et dans lequel l'embouchure du tunnel se déplace à des positions différentes dans un plan horizontal selon l'ensemble de blocs de moule qui est présenté à un moment particulier à l'embouchure du tunnel, l'appareil étant réglable afin qu'il assure l'alignement du courant de matière plastique (13) sur l'embouchure du tunnel pour les différentes positions de l'embouchure du tunnel.

3. Appareil selon la revendication 2, dans lequel les tronçons de bloc de moule sont déplacée par un dispositif de transport (17, 19) monté et réglable horizontalement sur un support (29) du dispositif de transport.

4. Appareil selon la revendication 3, dans lequel le dispositif de transport comprend deux voies (17, 19) de transport de bloc de moule placées côte à côte et réglables horizontalement ensemble sur le support.

5. Appareil selon la revendication 4, dans lequel l'une au moins des voies (17, 19) de transport de bloc de moule est réglable indépendamment sur le support par rapport à l'autre des voies de transport de bloc de moule.

6. Appareil selon la revendication 2, dans lequel l'extrudeuse (3) est réglable horizontalement.

7. Appareil selon la revendication 2, comprenant un guide réglable (40) qui est placé entre l'extrudeuse et le tunnel du moula et qui assure un ajustement horizontal du courant de matière plastique (13) provenant de l'extrudeuse vers l'embouchure du tunnel.

8. Appareil selon la revendication 2, dans lequel le dispositif de transport (17, 19) est réglable en vitesse en fonction de l'ensemble de tronçons (21, 25) de bloc de moule présenté à l'extrémité supérieure du tunnel de moule.

9. Appareil selon la revendication 2, comprenant un organe de commande qui est programmé afin qu'il ajuste automatiquement l'appareil pour le maintien de la transmission du courant de matière plastique fondue (13) à l'embouchure du tunnel à des positions différentes de celui-ci.
